# EUROPÄISCHE PATENTANMELDUNG

(11) **EP 1 315 017 A2**
(43) Veröffentlichungstag der Anmeldung: **28.05.2003**
(21) Anmeldenummer: 03003733.7
(22) Anmeldetag: 29.10.1997
(51) Int. Cl.: G02B 27/14

(54) **Optisches Bauelement und Verfahren zu seiner Herstellung**

(30) Priorität: 01.11.1996 CH 269496
(62) Teilanmeldung aus: 97944680.4
(71) Anmelder: Unaxis Balzers Aktiengesellschaft, 9496 Balzers (LI)
(72) Erfinder: Edlinger, Johannes, 6820 Frastanz (AT)
(74) Vertreter: Troesch Scheidegger Werner AG

(57) **Zusammenfassung**

Es wird ein optisches Bauelement, insbesondere ein X-Cube vorgeschlagen, bei dem ein erstes optisches Schichtsystem (5', 5'') jeweils zwischen ein Paar Kuben (20a, 20d / 20b, 20c) eingebettet wird und auf mindestens eine Oberfläche der resultierenden Kubenpaare ein weiteres Schichtsystem (7) durchgehend aufgebracht wird. Dabei werden vorgängig die Kubenpaar-Oberflächen, welche nachmals das weitere Schichtsystem (7) zwischen sich aufnehmen, durchgehend mechanisch oberflächenbearbeitet. Die jegliche Oberflächenbearbeitung und Relativpositionierung wesentlich erleichternde Kubenform der Teilkuben sowie des resultierenden Kubus (22) wird erst zuletzt in die resultierende Form gebracht, in welcher die optischen Schichtsysteme (5', 5'', 7) in Diagonalflächen liegen.

## Beschreibung

Die vorliegende Erfindung betrifft ein optisches Bauelement, welches einen Grundkörper und ein optisch wirksames Schichtsystem umfasst, welches mit mindestens der einen Schichtsystemfläche am Grundkörper liegt, nach dem Oberbegriff von Anspruch 1 bzw. 8.

Die Erfindung betrifft weiter ein Verfahren zu dessen Herstellung nach dem Oberbegriff von Anspruch 20, eine Verwendung eines solchen Bauelementes bzw. Verfahrens nach Anspruch 41 sowie eine optische Projektionsanordnung bzw. eine CCD-Kamera mit einem solchen Bauelement nach Anspruch 42 bzw. 43.

### Einleitung:

Z.B. in der DE-40 33 842 wird ein quaderförmiger, aus Einzelprismen mit dichroitischen Schichten zusammengesetztes optisches Bauelement als "dichroitisches Prisma" bezeichnet.

In der vorliegenden Schrift wird für ein solches Bauelement der Ausdruck
X-Cube
verwendet.

Die vorliegende Erfindung geht aus von Problemen, die bei bekannten X-Cubes bestehen, wie sie eben beispielsweise in der DE-40 33 842 beschrieben sind, beziehungsweise bei deren Herstellung. Die vorliegende Erfindung, die aufgrund der Problemlösung an solchen Bauelementen gefunden wurde, kann aber auf eine Vielzahl anderer optischer Bauelemente angewandt werden.

Deshalb geht die vorliegende Beschreibung von den spezifisch an X-Cubes zu lösenden Problemen aus, um dann, verallgemeinernd, den Einsatz der Erfindung mehr grundsätzlich zu erläutern.

### Beschreibung:

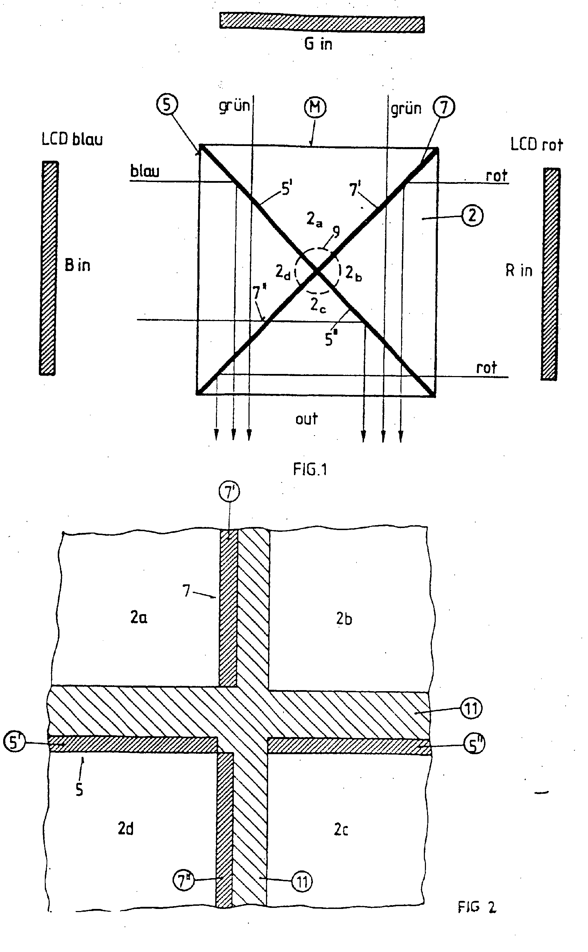

Anhand von Fig. 1 soll vorerst die grundsätzliche Wirkungsweise eines X-Cubes erläutert werden. Optische Bauteile dieser Art werden hauptsächlich in Projektoren eingesetzt, um im Spektralbereich des sichtbaren Lichtes Rot-/Grün- und Blaukanäle zu rekombinieren. Gemäss Fig. 1 umfasst ein solcher X-Cube 1 vier Einzelprismen 2a bis 2d. Dabei kann es sich beispielsweise um Glasprismen aus BK7-Glas handeln. Im Querschnitt bilden sie rechtwinklig gleichschenklige Dreiecke mit einem 90°-Winkel, üblicherweise mit Toleranzen von mehr ± 60 Winkelsekunden und Hypotenusenwinkeln von 45°, bei Toleranzen von einigen Winkelminuten. Die Länge der Hypotenuse beträgt typischerweise zwischen 5 mm und 50 mm, vorzugsweise 40 mm. Zwischen den beiden Prismenpaaren 2a und 2b einerseits, 2d und 2c anderseits ist eine optisch wirksame Schicht 5 eingebettet, welche sichtbares Licht im Blaubereich weitestgehend reflektiert, hingegen sichtbares Licht im Grünbereich bzw. im Rotbereich weitestgehend transmittiert. In Fig. 1 ist ein Teil dieses Blaureflektor-Schichtsystems, als Farbteilersystem, mit 5', der andere mit 5'' bezeichnet.

Zwischen den beiden Prismenpaaren 2a und 2d einerseits, 2b und 2c anderseits ist ein weiteres optisch wirksames Schichtsystem 7 eingebettet, welches sichtbares Licht im Rotbereich weitestgehend reflektiert, hingegen im Grünbereich und im Blaubereich weitestgehend transmittiert. In Fig. 1 sind ebenfalls die beiden Schenkel des Rotreflektor-Schichtsystems, als Farbteilersystem, mit 7' und 7" bezeichnet.

Am X-Cube ergeben sich mithin drei Eingangskanäle für Rot-, Grün- und Blaulicht von entsprechenden Quellen, beispielsweise LCD-gesteuert, und ein Ausgangskanal mit den rekombinierten Eingangssignalen. An den Reflektorensystemen je zwischen den angesprochenen Prismenpaaren erfolgt Reflexion des unter 45° einfallenden, entsprechend farbigen Lichtes, insbesondere S-polarisierten Lichtes. Im weiteren können und sind üblicherweise die Hypotenusenflächen der Prismen 2 mit einem Antireflexschichtsystem beschichtet.

Weil sich die Pixel der Rot-Blau-Grün-Eingangskanäle möglichst exakt überdecken sollen, müssen die Winkeltoleranzen an den Prismen 2 und im zusammengestellten X-Cube 1 sehr klein sein.

Zu grosse Toleranzen ergeben eine schlechte Abbildungsqualität, da sich die Bilder nicht sauber decken: Es treten Unschärfen bzw. Farbsäume auf.

Der in Fig. 1 gestrichelt eingetragene Ort 9, wo die vier Einzelprismen 2 aufeinandertreffen, befindet sich auch im abbildenden Strahlengang. Optische Störungen, die an diesem Ort erzeugt werden, schlagen sich im Bild im Ausgangskanal OUT wie erwähnt z.B. als Unschärfen nieder. Es ist eine Forderung an solche Bauteile und deren Herstellverfahren, dass insbesondere an diesem Ort 9 entstehende Störungen minimiert werden.

Es ist beispielsweise aus der DE-40 33 842 bekannt, X-Cubes aus vier Prismen 2 gemäss Fig. 1 herzustellen. Die vier einzelnen Prismen werden zuerst durch Fräsen, Schleifen und Polieren in ihren Dimensionen exakt hergestellt. Darnach erfolgt entlang ihrer Kathetenflächen die Beschichtung mit dem entsprechend notwendigen Schichtsystem und, gegebenenfalls, an deren Hypotenusenflächen mit einem entspiegelnden Antireflex-Schichtsystem. Schliesslich werden die beschichteten Einzelprismen 2 verkittet.

Bereits wesentlich früher als die DE-OS 40 33 842, nämlich aus der US-A-2 737 076, war es bekannt, dass bei Vorsehen unterschiedlicher optischer Schichtsysteme an den Kathetenflächen von Prismen, am Scheitelpunkt, also gemäss Fig. 1 im Bereich 9, Probleme bezüglich der Schichtsystem-Stossstelle entstehen. Um dieses Problem zu lösen, wird in dieser Schrift vorgeschlagen, an jeweils zwei 90°-Prismen je eine Kathetenfläche mit einer Maskierungsschicht zu versehen und die beiden Prismen mit den maskierten Flächen so aneinanderzulegen, dass die beiden anderen Kathetenflächen fluchten. Diese werden mit Sulfid- und Fluoride-Schichten versehen. Darauf werden die Prismen wieder auseinandergebrochen, eine bereits beschichtete und eine Kathetenfläche eines unbeschichteten Prismas maskiert, aneinandergelegt, und es werden, nach Entfernung der vormals aufgebrachten Maskierung, die unbeschichteten, ebenfalls fluchtend angeordneten Kathetenflächen mit Zink-Sulfid und Blei-Fluoride-Schichten - letzteres Material ein kumulativ wirkendes Kontaktgift - versehen. Wiederum werden die Prismen getrennt. Nun werden vier der wie beschrieben beschichteten Einzelprismen zu einem X-Cube vereinigt, nach Entfernen des Maskenmaterials mittels Lösungsmitteln.

In einer Weiterentwicklung geht die GB-754 590 davon aus, dass es äusserst schwierig sei, die bereits beschichteten Einzelprismen präzise zu vereinen. Deshalb wird hier wie folgt vorgegangen:
- Zwei 90°-Prismen werden Scheitel an Scheitel mit jeweils ausgerichteter einen Kathetenfläche so positioniert, dass zwischen den beiden anderen, sich gegenüberliegenden Kathetenflächen ein Spalt entsteht.
- Der Spalt wird im Scheitelbereich mittels einer löslichen Maske verschlossen.
- Die fluchtenden Kathetenflächen werden gemeinsam beschichtet, die Prismen wieder getrennt und die Maske entfernt. Dabei sollte erreicht werden, dass die Beschichtung parallel zum Scheitel bricht.
- Eine beschichtete Kathetenfläche und eine Kathetenfläche eines unbeschichteten Prismas werden, unter Ausrichtung der jeweils anderen Kathetenflächen auf einem optisch flachen Block, verkittet, wobei Austreten von Kitt am Scheitel durch Abdeckungen, die an den fluchtenden Flächen entfernbar angekittet werden, verhindert wird.
- Die fluchtende Fläche des Prismenpaares wird, nach Entfernen der Abdeckung und ausgetretenen Kitts, beschichtet.
- Ein so beschichtetes und ein an den fluchtenden Flächen nicht beschichtetes Prismenpaar werden unter minutiöser Überwachung und Einstellung ihrer Relativlage verkittet.

### Nachteile bekannter Verfahren und bekannter X-Cubes

- Der Aufwand an handling der z.B. aus der GB-754 590 oder aus der DE-40 33 842 vorbekannten Vorgehensweise zur Herstellung von X-Cubes ist sehr hoch: Zuerst muss für die Glasbearbeitung jede der drei Seitenflächen der einzelnen Prismen 2 gemäss Fig. 1 eingespannt bzw. gehaltert werden, wie durch Aufgipsen, Verkitten oder Ansprengen. Darnach müssen diese Flächen für die Beschichtung der einzelnen Prismen 2 gereinigt, dann für den Beschichtungsprozess eingespannt und darnach wieder ausgespannt werden. Dabei sind bei der DE-40 33 842 durchschnittlich zwei Seiten pro Einzelprisma zu beschichten. Dieses aufwendige handling treibt die Kosten für die Herstellung derartiger X-Cubes nachhaltig in die Höhe.
- Mit Blick auf Fig. 1, insbesondere Partie 9, ist ersichtlich, dass die Beschichtung der als Rot- und Blaureflektoren dienenden Schichtsysteme so vorgenommen werden muss, dass keine Beschichtung um die 90°-Kanten herum an den Einzelprismen erfolgt. Dies bedingt einen hohen Aufwand an den Beschichtungshalterungen bzw. für die Abdeckung der nicht zu beschichtenden Katheten. Diesbezüglich wird auf die Abdeckungen gemäss der GB-754 590 und der US-A-2737076 (Rock et al.) verwiesen.
- Bei der Beschichtung und während des gesamten handlings der Einzelprismen 2 liegen insbesondere die 90°-Prismenkanten ungeschützt offen, gerade diejenigen Kanten, die nach obigen Ausführungen sehr genau sein müssen. Dies führt unweigerlich zu Aussprüngen, wenn man nicht einen hohen Aufwand treibt, diese Kanten äusserst gut zu schützen, was wiederum mit Kosten verbunden ist.
- Geht beispielsweise bei der Beschichtung der Einzelprismen 2 etwas schief, so muss ein solches Einzelstück wieder eingespannt, geschliffen und überpoliert werden, will man es nicht wegwerfen. Korrekturprozesse sind mithin nur umständlich zu implementieren.
- Das Verkitten in exakter Relativposition der Einzelprismen 2 gestaltet sich höchst schwierig und aufwendig. Hierzu müssen komplizierte Vorkehrungen, wie in der DE-40 33 842 beschrieben, vorgesehen werden. Dabei werden z.T. auch bei der GB 754 590 Einzelprismen verkittet, was mit grossem zeitlichen und daher finanziellen Aufwand verbunden ist.
- Ganz unabhängig von den obgenannten Nachteilen entsteht durch das vorbekannte Vorgehen gemäss der DE 40 33 842 im Bereich 9 gemäss Fig. 1 eine Struktur, wie sie, als vergrösserter Ausschnitt, in Fig. 2 dargestellt ist. Darin sind dieselben Bezugszeichen wie in Fig. 1 eingesetzt. Die Positionsnummer 11 bezeichnet die Kittfugen. Gemäss der GB 754 590 ergibt sich die Stossstelle aus einer Bruchlinie, einer Linie, die wohl generell parallel zum betrachteten Prismenscheitel verlaufen mag, deren exakter Verlauf aber kaum beherrschbar ist.
   Daraus ist ersichtlich, dass gemäss DE 40 33 842 die Kittfugen 11 zu einer Unterbrechung sowohl des Rotreflektor-Schichtsystems 7 (aus 7' und 7'') wie auch des Blaureflektor-Schichtsystems 5 (aus 5' und 5'') führen, und gemäss der GB 754 590 die Stossverbindung des unterbrochenen Schichtsystems an das durchgehende weitgehend zufällig ist.
- Da im weiteren, sowohl gemäss der GB 754 590 wie auch der DE 40 33 842, das X-Cube durch die Verkittung der Einzelprismen 2 erstellt wird, deren 90°-Kanten im Laufe des Herstellungsprozesses ungeschützt Einflüssen ausgesetzt waren, ergeben sich Störungen im Bereich 9 praktisch unausweichlich durch Ausbrüche an den 90°-Kanten der Einzelprismen 2.

Es ist Aufgabe der vorliegenden Erfindung, ausgehend von dem aus der GB 754 590 bekannten Bauelement, ein optisches Bauelement, dabei insbesondere ein X-Cube, vorzuschlagen, welches die anhand von Fig. 2 erläuterten Nachteile nicht aufweist.

Im weiteren ist es Aufgabe der vorliegenden Erfindung, ein Herstellverfahren vorzuschlagen, das die obgenannten Nachteile bei der Herstellung insbesondere der erwähnten X-Cubes nicht aufweist. Das aufzufindende Herstellverfahren soll weiter hohe Wirtschaftlichkeit garantieren, dies bei hoher Präzision und mit reduzierter Zahl Verfahrensschritte.

Bei einem strahlenoptischen Bauelement der eingangs genannten Art wird dies dadurch erreicht, dass die Fläche des Grundkörpers durchgehend oberflächenbearbeitet wird. Damit ist es möglich, das ersterwähnte, flächig durchgehende, optisch wirksame Schichtsystem so auszuführen, dass das zweite Schichtsystem definiert und höchst exakt an die Fläche des ersten stösst. Eine Struktur, wie sie anhand von Fig. 2 erläutert wurde, wird dabei auch vermieden: Es verläuft nämlich, mit Blick auf Fig. 2, eines der Schichtsysteme, vorzugsweise 7, durchgehend, Einzel-Partien 7', 7'' existieren nicht mehr. Erfindungsgemäss stösst nun ein zweites Schichtsystem, vorzugsweise vom System 5, 5' exakt und definiert an das durchgehende 7 und, im Falle eines X-Cubes, schliesslich ein drittes, 5''. Dies ist in Fig. 2, die bekannte Stossstrukturen zeigt, nicht dargestellt. Ein erfindungsgemässes Bauelement zeichnet sich weiter nach dem Kennzeichen von Anspruch 9 aus.

In einer bevorzugten Ausführungsvariante des erfindungsgemässen Bauelementes bzw. am erfindungsgemässen Bauelement nach Anspruch 9 umfassen die Schichtsysteme eine Abfolge von optisch hoch- und niederbrechenden Schichten. Dabei wird als Material der hochbrechenden Schichten mindestens überwiegend vorzugsweise ein Oxid oder Oxinitrid, vorzugsweise mindestens eines der folgenden eingesetzt:
TiO₂, Ta₂O₅, Nb₂O₅, HfO₂, ZrO₂, SiOₓN_{y}.

Als Material der niederbrechenden Schichten wird dabei weiter mindestens überwiegend vorzugsweise ein Oxid oder Oxinitrid, dabei vorzugsweise mindestens eines der folgenden Materialien eingesetzt:
SiO₂, Al₂O₃, SiOₓN_{y}.

Die Packungsdichte der Schichten an den erwähnten erfindungsgemässen Bauelementen ist vorzugsweise mindestens 0,95,dabei gar bevorzugterweise 0,97.

Bezüglich Definition der Packungsdichte sei auf H.A. MACLEOD, "Thin Film Optical Filters", pp. 398, 2nd ed., Adam Hilger Ltd., Bristol, verwiesen.

Die Wahl der angegebenen Schichtmaterialien und deren hohe Packungsdichte ermöglichen es ohne weiteres, wie erwähnt wurde, die Fläche des Grundkörpers und die Breitfläche des zweiten obgenannten Schichtsystems durchgehend gleich mechanisch oberflächenzubearbeiten.

Im weiteren sind in bevorzugter Ausführung des erfindungsgemässen Bauelementes nach Anspruch 1 bzw. am Bauelement nach Anspruch 9 die Schichten oft röntgenamorph. Insbesondere verschieben sich ihre Spektraleigenschaften innerhalb eines Temperaturbereiches von 20°C bis 100°C spektral um höchstens 5 nm.

Am erfindungsgemässen Bauelement nach Anspruch 1 bevorzugt und an demjenigen nach Anspruch 9 erfüllen weiter die Schichtsysteme mechanisch die Norm MIL-M-13508 C (L-T-90 D bzw. A-A113B), und sie erfüllen weiter mechanisch und chemisch die Norm MIL-C-675 B/C.

Das erfindungsgemässe Verfahren zeichnet sich dadurch aus, dass zur Lösung der genannten Aufgabe an mindestens zwei Teilkörpern des Grundkörpers des Bauelementes je eine Oberfläche erstellt wird, wobei die erwähnten zwei Oberflächen an den mindestens zwei Teilkörpern zueinander komplementär sind, d.h. mit engen Toleranzen aufeinanderpassen. Darnach wird mindestens eine dieser komplementären Oberflächen mit einem optisch wirksamen Schichtsystem versehen, wie insbesondere mit dem Rot- bzw. Blaureflektor-Schichtsystem, wenn es sich beim herzustellenden Bauelement um einen X-Cube handelt.

Darnach werden die erwähnten Teilkörper entlang der genannten komplementären Oberflächen mit nun dazwischenliegendem Schichtsystem miteinander verbunden, z.B. durch Verkitten. Damit wird ein zusammengesetzter Teilkörper gebildet. Am zusammengesetzten Teilkörper wird eine den mindestens zwei Teilkörpern gemeinsame Oberfläche mechanisch oberflächenbearbeitet, welche gewinkelt zu den komplementären, miteinander verbundenen Oberflächen liegt, womit die komplementären Oberflächen, entlang welchen die Teilkörper verbunden sind, an die gemeinsame, bearbeitete Oberfläche stossen, gemeinsam mit dem dazwischenliegenden Schichtsystem. Schliesslich wird entlang dieser gemeinsam mechanisch bearbeiteten Oberfläche ein weiteres optisch wirksames Schichtsystem aufgebracht.

Bevorzugte Ausführungsformen des erfindungsgemässen Bauelementes bzw. Verfahrens sind in den abhängigen Ansprüchen spezifiziert.

Betreffs der erwähnten erfindungsgemässen Verfahrens ist, unter anderem, ein wesentlicher Aspekt für rationelle und damit kostengünstige Fertigung auch darin zu sehen, dass das Bauelement aus quaderförmigen Teilkörpern zusammengesetzt wird und erst zuletzt zu Quaderflächen schiefwinklige Flächen angeformt werden. Dies ermöglicht höchst exakte Positionierungs- und Oberflächenbearbeitungsschritte, indem bis zuletzt an den eingesetzten Körpern nur Parallelflächen vorhanden sind.

Das erfindungsgemässe Bauelement wird bevorzugterweise als X-Cube eingesetzt bzw. das erfindungsgemässe Verfahren zur Herstellung eines solchen X-Cubes. Im weiteren wird eine optische Projektionsanordnung mit mindestens einem als X-Cube ausgebildeten erfindungsgemässen Bauelement vorgeschlagen, welches aufgrund der erfindungsgemäss geringen optischen Störungen, insbesondere im empfindlichen Zentrumsbereich gemäss 9 von Fig. 1, optisch ausgezeichnete Eigenschaften aufweist, wobei insbesondere eine CCD-Kamera vorgeschlagen wird mit einem solchen X-Cube für die Farbenaufteilung. Bei einem solchen optischen Gerät sollte die Grösse gestörter Zonen kleiner sein als eine Pixelgrösse, die heutzutage in der Grössenordnung von 4 µm liegt.

Eine optische Projektionsanordnung mit mindestens einem als X-Cube ausgebildeten erfindungsgemässen Bauelement weist insbesondere im anhand von Fig. 2 erläuterten Zentrumsbereich 9 eine wesentliche Reduktion der optischen Fehler auf und ist dank des vorgeschlagenen Verfahrens wesentlich kostengünstiger und präziser herstellbar.

Die Erfindung wird anschliessend anhand von Figuren weiter erläutert. Diese zeigen:
- Fig. 1: in Aufsicht ein X-Cube bekannter Art zur Erläuterung seiner Wirkungsweise;
- Fig. 2: an einem vorbekannten X-Cube gemäss Fig. 1 den zentralen Stossstellenbereich der optisch wirksamen Schichtsysteme;
- Fig. 3: perspektifisch ein bei Durchführung des erfindungsgemässen Verfahrens realisiertes Zwischenprodukt, an sich bereits ein erfindungsgemässes optisches Bauelement;
- Fig. 4a bis 4h: Verfahrenszwischenprodukte, wie sie bei Durchführung der erfindungsgemässen Verfahren realisiert werden, wobei die Strukturen gemäss Fig. 4f, g und h bereits erfindungsgemässe optische Bauelemente darstellen;
- Fig. 5: den Schichtsystem-Stossbereich in vergrösserter Darstellung am erfindungsgemässen Verfahrenszwischenprodukt gemäss Fig. 4f;
- Fig. 6 Fig. 7: und verallgemeinerte, erfindungsgemässe optische Bauelement-Strukturen mit ihren Schichtsystem-Stossbereichen;
- Fig. 8: ausgehend von der Darstellung nach Fig. 5 eine Weiterentwicklung des dort gezeigten, erfindungsgemässen optischen Bauelementes bzw. seines Stossbereiches;
- Fig. 9: ausgehend von anhand seines Stossbereiches in Fig. 5 dargestellten, erfindungsgemässen Bauelementes eine weitere Weiterentwicklung;
- Fig. 10: die Ausbildung des zentralen Stossbereiches an einem erfindungsgemäss optischen Bauelement, insbesondere nach dem erfindungsgemässen Verfahren hergestellt, im Vergleich mit dem anhand von Fig. 2 dargestellten, vorbekannten Stossbereich an vorbekannten optischen Bauelementen der X-Cube-Gattung;
- Fig. 11: eine schematische Darstellung eines verallgemeinerten, mit der vorliegenden Erfindung realisierbaren und an sich erfinderischen optischen Bauelementes.

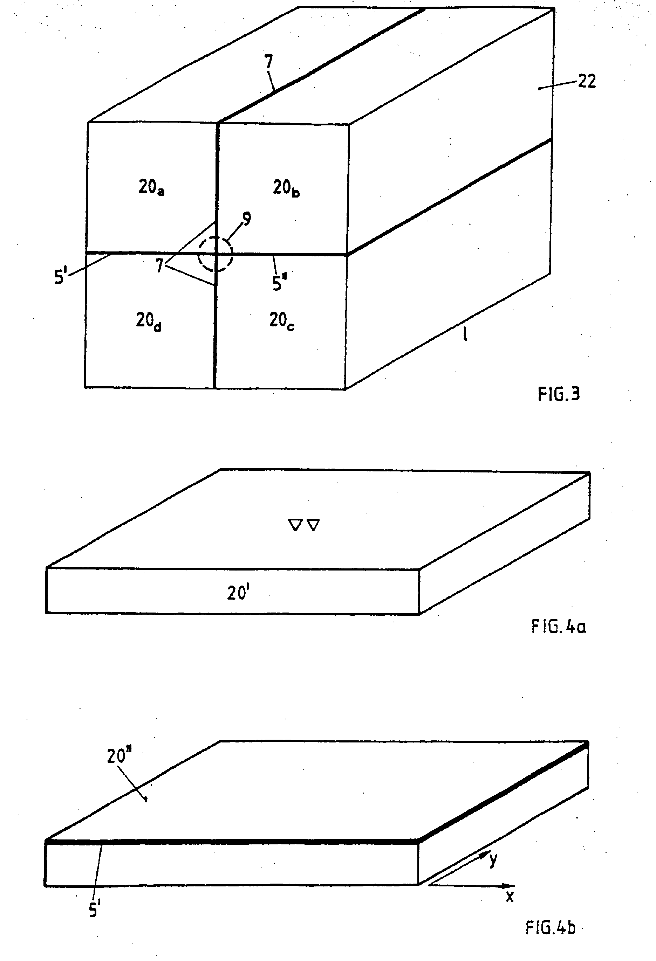

In Fig. 3 ist bezüglich Herstellung eines erfindungsgemässen X-Cubes ein bereits an sich erfindungsgemässes Zwischenprodukt dargestellt; es ist ein quaderförmiges Gebilde aus vier Teilquadern 20a bis 20d. Zwischen den Teilquaderpaaren 20a und 20d einerseits, 20b und 20c anderseits liegt ein erstes, optisch wirksames Schichtsystem - für die X-Cube-Fertigung und in Analogie zu Fig. 1 das Schichtsystem 7 - während zwischen den Kubuspaaren 20a und 20b bzw. 20d, 20c ein weiteres optisch wirksames Schichtsystem - nämlich bei der X-Cube-Fertigung und mit Blick auf Fig. 1 das Schichtsystem 5 mit Teilen 5' und 5'' - liegt. Für die Fertigung von X-Cubes beträgt die Länge 1 des Quaders 22 1 bis 8 oder mehr, insbesondere aber 4 X-Cube-Längen, in Fig. 1 gemessen senkrecht zur Figurenebene. Grundsätzlich zeichnet sich dieses Gebilde, dessen Herstellung nachfolgend erläutert werden wird, durch folgendes aus:
- Alle vorkommenden Winkel betragen 90°, wodurch die Teilkörper 20 an sich und das Zwischenprodukt 22 äusserst gut herstellbar sind. Dies, weil u.a. sich jeweils gegenüberliegende Seiten simultan bearbeitbar sind, wie beispielsweise durch Doppelläppen bzw. Doppelpolieren. Dadurch wird die Planität insbesondere der aneinanderliegenden Quaderflächen so gut, dass bei interferometrischer Untersuchung höchstens 20, vorzugsweise höchstens 10, gar vorzugsweise höchstens 5 Interferenzringe auftreten.
- Bei simultaner doppelseitiger Bearbeitung sind auch sehr hohe Parallelitäten der jeweils sich gegenüberliegenden Flächen erzielbar, vorzugsweise mit Abweichungen ≤ 2 µm auf 150 mm Länge. Ausserdem wird eine hohe Planität jeder Fläche erreicht, beispielsweise mit Planitätsabweichungen ≤ 1 µm auf Längen von 150 mm.
- Weil alle beteiligten Winkel 90° (± Toleranzen) betragen, ist jeder der Teile 20a bis 20d und 22 gut halt- und positionierbar. Bei Doppelläppen bzw. Doppelpolieren entfällt überhaupt eine aufwendige Halterung, und der entsprechende Teil kann einfach in einen Poliereinsatz eingelegt werden. Die Halterung der Teile, wie durch Ansprengen, Gipsen oder Kitten, kann vorteilhafterweise entfallen.
- Alle beteiligten Winkel sind mit grosser Präzision herstellbar, weil es ausnahmslos 90°-Winkel sind und nicht beispielsweise wesentlich schwieriger herzustellende Winkel von 45°. Die Winkeltoleranzen sind insbesondere für die 90°-Zentralwinkel der Teilkörper 20 vorzugsweise höchstens ± 60 Winkelsekunden, vorzugsweise gar höchsten ± 20 Winkelsekunden.
- Der Messaufwand, um die dargestellten Teile geometrisch zu vermessen, kann sehr klein gehalten werden, wie durch Einsatz eines Interferometers.
- Insbesondere beim Einsatz planparalleler, zu verkittender komplementärer Flächen ist das Verkitten sehr einfach, und es können Kittfugen präzis definierter Dicke erzeugt werden, vorzugsweise mit einer Dicke von höchstens 10 µm, vorzugsweise gar von höchstens 3 µm.
- Die Herstellung derartiger Teile ist leicht skalierbar, d.h. man kann durch Verwendung verschieden grosser Platten mehrere der als T-Cubes bezeichneten Teile 22 am Stück herstellen, die man anschliessend vereinzelt, vorzugsweise durch Zersägen.
- Das optische Messen an beschichteten Flächen von Quaderkörpern mit planparellen Flächen ist wesentlich einfacher als bei Dreiecksprismen.

Im folgenden soll anhand der Figuren 4a bis 4c, Schritt für Schritt, erläutert werden, wie der an sich bereits erfinderische Körper 22 nach Fig. 3 erfindungsgemäss hergestellt wird. Dabei wird auch offensichtlich werden, dass die bezüglich Stand der Technik und Fig. 2 diskutierten Nachteile im Zentralbereich 9, was Schichtführung und Kantenprazision anbelangt, tatsächlich wegfallen.

In Fig. 4a ist eine Rohlingsplatte 20' dargestellt. Ihre Dimension liegt bevorzugterweise im Bereich
(100 - 200 mm) x (100 - 200mm) x (3 - 40 mm),
typischerweise im Bereich
190 mm x 178 mm x 3 mm oder
190 mm x 178 mm x 40 mm.

Durch Doppelläppen werden sich gegenüberliegende Flächen gemäss Fig. 4b bearbeitet, insbesondere die Flächen ∇∇.

Daraufhin wird gemäss Fig. 4b die eine der Flächen ∇∇ der Platte 20' mit einem Schichtsystem 5' beschichtet, es resultiert die Platte 20".

Handelt es sich bei der hier diskutierten Fertigung um die Fertigung von X-Cubes, dann wird bevorzugterweise und wie in Fig. 4b eingetragen das Blaureflektorschichtsystem 5' aufgebracht, und zwar, weil das Blaubild unschärfer sein darf als das Rotbild aufgrund entsprechender Empfindlichkeiten des menschlichen Auges.

An dieser Stelle muss darauf hingewiesen werden, dass die Platte 20' sowohl in y-Ausrichtung wie auch in x-Ausrichtung der Dimension eines oder mehrerer Bauelemente, vorzugsweise vier entspricht, Vereinzelung in beiden Dimensionen kann und wird nachmals erfolgen.

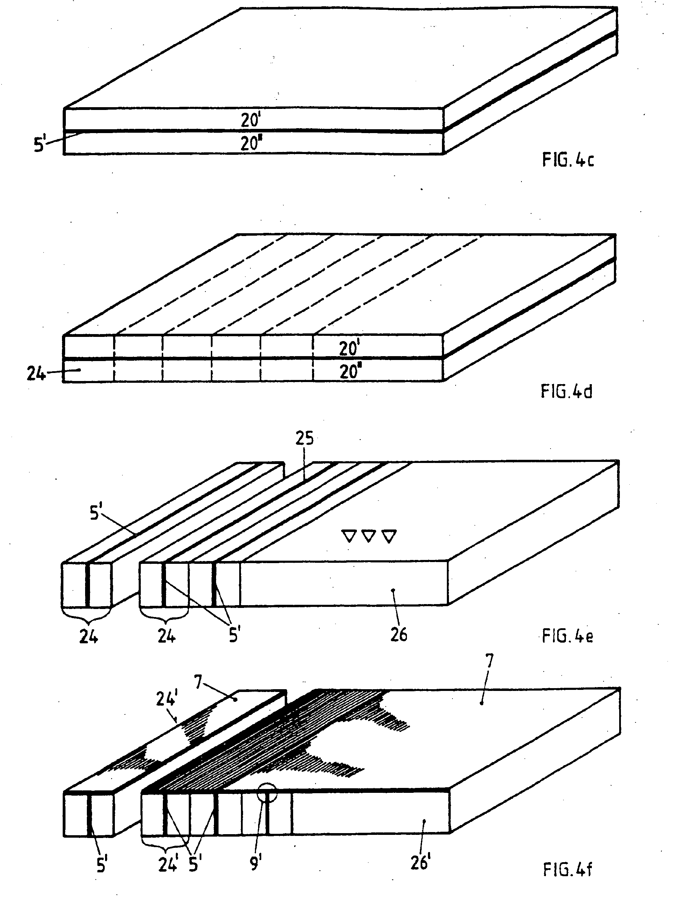

Gemäss Fig. 4c werden nun grundsätzlich eine Platte 20' und eine Platte 20" so miteinander verbunden, vorzugsweise verkittet, dass zwischen ihnen das erwähnte Schichtsystem, im Spezialfall vorzugsweise das Blaureflektorschichtsystem 5', eingebettet ist.

Ob dabei nur die Fläche der einen der beteiligten Platten 20'' beschichtet ist oder beide und, entsprechend, die Kittschicht zwischen der Oberfläche einer der Platten 20' und der Beschichtung oder zwischen zwei Beschichtungen liegt, kommt auf den jeweiligen Einsatzzweck an. Bevorzugt wird insbesondere bei der X-Cube-Fertigung das Beschichten einer der beteiligten komplementären Oberflächen und Verkitten dieser Oberfläche mit der Komplementärfläche der unbeschichteten Platte 20'.

Es wird von komplementären Flächen deshalb gesprochen, weil, wie später noch ausgeführt wird, für andere Einsatzzwecke die Körper mit beliebig gekrümmten Flächen aufeinandergelegt werden können mit dazwischenliegendem Schichtsystem, vorausgesetzt, die beteiligten Flächen sind in geforderter Genauigkeit komplementär passend.

Gemäss Fig. 4d werden nun die Doppelplatten 20', 20'' gemäss Fig. 4c durch Sägen vereinzelt, in Balken 24.

Gemäss Fig. 4e werden nun die gesägten Balken 24 um 90° gekippt und bevorzugterweise zwei und mehr derartiger Balken exakt nebeneinandergelegt, 26, oder es wird, wie links in den folgenden Figuren dargestellt, ein einzelner Balken 24 weiterbehandelt.

Die Balken müssen zur Bildung der Platte 26 so ausgerichtet sein, dass beim nächsten Bearbeitungsschritt das zweite Schichtsystem, im Fall der X-Cube-Herstellung das Rotreflektor-Schichtsystem 7, genau senkrecht auf die bearbeiteten Flächen abgelegt wird. Dies wird dadurch äusserst erleichtert, dass alle Flächen des oder der Balken 24 senkrecht und praktisch planparallel zueinander stehen bzw. verläufen und äusserst eben ist bzw. sind. Zum Beispiel kann man, wie bei 25 angedeutet, bevorzugterweise mehrere Balken 24 gegeneinander ansprengen, um einen eventuellen Winkelfehler beim Sägen zu kompensieren. Es können aber auch, wie erwähnt und links dargestellt, einzelne der Balken 24 geläppt bzw. poliert werden, wenn der Sägeschritt hinreichend genau ist.

Es werden nun, wie mit ∇∇∇ dargestellt, die sich gegenüberliegenden Seitenflächen der Platte 26 bzw. des Einzelbalkens 24 doppelgeläppt bzw. doppelpoliert, und zwar mit den Stossbereichen der Schichtsysteme 5'.

Gemäss Fig. 4f wird nun weiter eine der eben polierten Oberflächen der Platte 26 bzw. des Einzelbalkens 24 im ersten Fall für alle beteiligten Balken 24 gemeinsam gegebenenfalls noch einmal überpoliert und anschliessend durchgehend beschichtet. Bei der X-Cube-Herstellung wird an dieser Stelle und wie in Fig. 4f auch eingetragen, das Rotreflektor-Schichtsystem 7 aufgebracht.

Damit wird das erste Schichtsystem 5' und die Verkittung nach Überpolierung grossflächig überschichtet mit 7. Bevorzugterweise wird hierzu ein relativ kalter Beschichtungsprozess eingesetzt, vorzugsweise ein plasma- und/oder ionengestütztes Beschichtungsverfahre, vorzugsweise ein genügend kaltes PVD-Verfahren, vorzugsweise Sputtern, oder PECVD-Verfahren, insbesondere aber ein Kaltbeschichtungsverfahren mit Substrattemperaturen von höchstens 150°C, vorzugsweise von höchstens 80°C. Die bevorzugt eingesetzte Schichtsystem-Struktur, die bevorzugten Schichtmaterialien, die bevorzugte Packungsdichte der Schichten wurden eingangs erläutert.

Die Struktur gemäss Fig. 4f und die bis anhin vorgeschlagene Verfahrensweise sind an sich erfinderisch, und zwar unabhängig davon, ob die mit 5' und 7 dargestellten Schichtsysteme rechtwinklig zueinander stehen oder schiefwinklig und ob die beschichteten Flächen plan oder, wie oben erwähnt, komplementär gekrümmt sind. Es werden Stossstellen 9' geschaffen, an denen das eine Schichtsystem - 7 - kontinuierlich den Stoss des zweiten - 5' - überdeckt, wobei die mit dem System 7 überdeckte Fläche einheitlich mechanisch oberflächenbearbeitet ist.

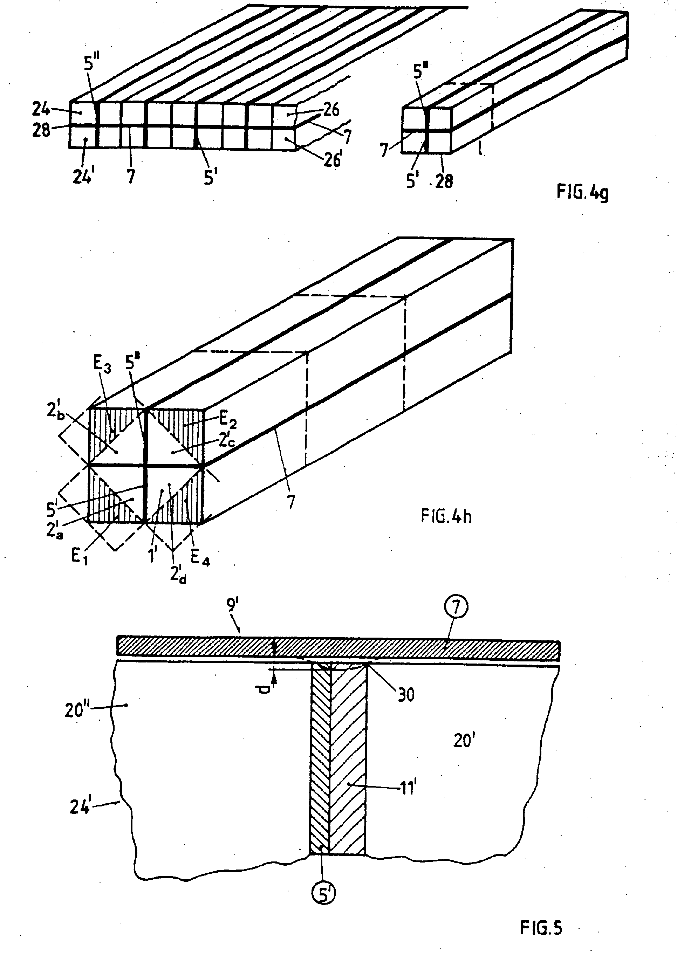

Nun werden, gemäss Fig. 4g, eine unbeschichtete Platte 26 oder ein unbeschichteter Einzelbalken 24 gemäss Fig. 4e, gegebenenfalls nach Absprengen, und eine beschichtete Platte 26' bzw. ein beschichteter Einzelbalken 24' nach Fig. 4f aufeinandergelegt und verkittet. Aus dem Schichtsystem 5' der unbeschichteten Platte 26 bzw. des unbeschichteten Balkens 24, als drittes aufgebrachtes Schichtsystem, nebst den beiden 7 und 5' an der beschichteten Platte 26' bzw. dem beschichteten Balken 24', wird nun Schichtsystem 5''.

Die resultierenden T-Cube-Streifen 28 werden gegebenenfalls entsprechend den vorzusehenden Längen 1 vereinzelt. Bevorzugterweise werden aber vor diesem Vereinzeln für die Herstellung der X-Cubes die T-Cubes 28 gemäss Fig. 4h, z.B. durch Sägen und Bearbeiten ihrer Oberflächen entlang den Ebenen E abgeschrägt, vorzugsweise wiederum doppelseitig, wie mit E₁, E₂ bzw. E₃, E₄ dargestellt. Damit entstehen gegebenenfalls nach Ablängen in Richtung 1 sehr genaue erfindungsgemässe X-Cubes 1'. Die 45°-Winkeltoleranzen sind dabei höchstens ± 2 Winkelminuten, sind vorzugsweise höchstens ± 1 Winkelminute.

Gegebenenfalls werden die abgeschrägten Flächen entsprechend den Ebenen E in Fig. 4h mit einem Antireflexschichtsystem versehen und, sofern dies vorgenommen wird, werden die X-Cubes erst darnach vereinzelt.

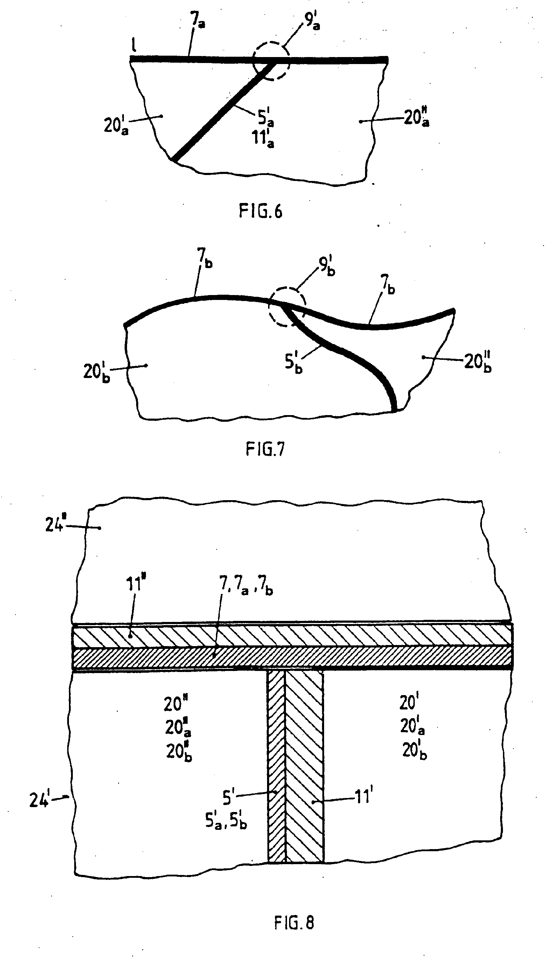

Rückblickend auf Fig. 4f ist in Fig. 5 ein Ausschnitt 9' eines an sich erfinderischen strahlenoptischen Bauteils 1 dargestellt, und zwar wie er bei der Herstellung von X-Cubes auftritt. Bei letzterer liegen zwischen planparallelen Flächen der zwei zertrennten Körper 20', 20'' (Fig. 4e, 4d) aus Glas oder einem Kunststoff, wie vorzugsweise aus BK7-Glas oder Polycarbonat oder PMMA, ein erstes optisches Schichtsystem, entsprechend 5', bei der X-Cube-Fertigung dem Blaureflektor-Schichtsystem. Die beiden Körper 20', 20'' sind bei 11' verkittet. Nach gemeinsamer Oberflächenbearbeitung durch Polieren oder Läppen ist auf beiden Körpern 20', 20'' gemeinsam, das Schichtsystem 5' mit der Kittschicht 11' überdeckend, das zweite optische Schichtsystem entsprechend 7, im Falle eines X-Cubes das Rotreflektorschichtsystem, aufgebracht. Wie im Vergleich mit Fig. 2 ersichtlich, entfällt die Zweiteiligkeit von 7 in 7' und 7'' erfindungsgemäss.

Durch die gemeinsame mechanische Oberflächenbearbeitung entsteht im Stossbereich, wie bei 30 in Fig. 5 eingetragen, nur eine leichte Einwölbung der Kittschicht 11' bzw. des Schichtsystems 7, welche eine Maximaltiefe d bezüglich der planen Fläche der Beschichtung 7 von höchstens 5 µm, vorzugsweise von höchstens 2 µm aufweist.

In Fig. 6 ist, nun verallgemeinernd, ein wie dasjenige gemäss Fig. 5 erfinderisches optisches Bauelement dargestellt, bei welchem das zweite Schichtsystem 5'a schiefwinklig an das plane Schichtsystem 7a stösst.

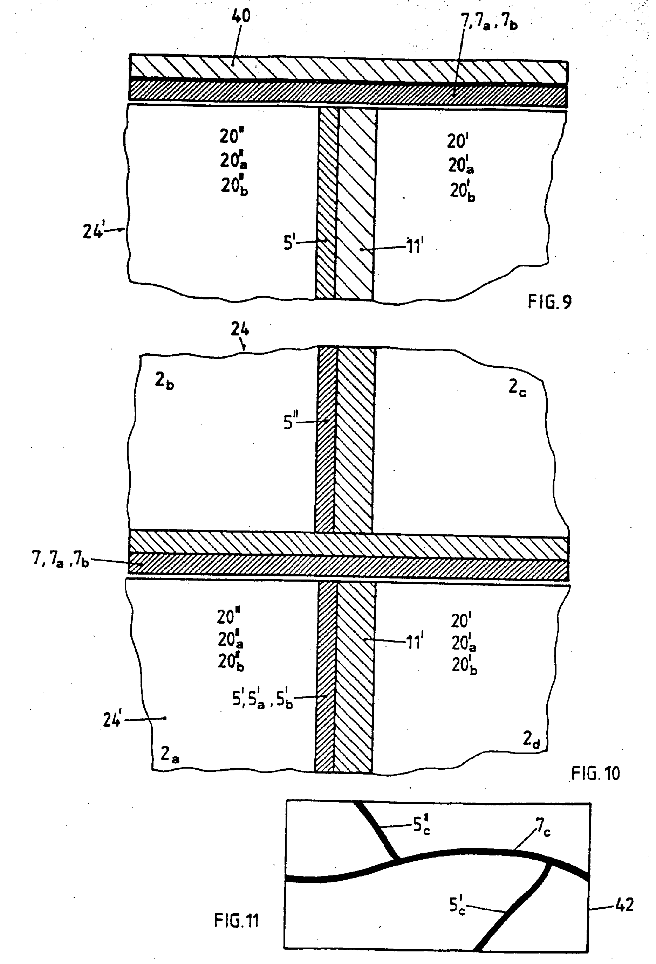

In Fig. 7 sind die komplementären Flächen der Körper 20'_{b}, 20"_{b} gekrümmte Flächen, ebenso die mit dem Schichtsystem 7b beschichtete, gemeinsame Oberfläche. In äusserst definierter Art und Weise stossen die Schichten 5' und 7 aneinander, gemäss Fig. 5, für die X-Cube-Fertigung, insbesondere rechtwinklig. Das eine Schichtsystem - 7 - verläuft dabei ununterbrochen gleichmässig, insbesondere auch über die Stossstelle. Dies ist insbesondere in allen Anwendungen wesentlich, wo sich die Stossstellenbereiche beispielsweise entsprechend 9'_{b} von Fig. 7 oder 9'ₐ bzw. 9' bei der X-Cube-Fertigung, auf den Strahlengang der von den Schichtsystemen beeinflussten Strahlung, insbesondere optischen Strahlung, auswirken. Der Fachmann erkennt nun ohne weiteres, insbesondere im Zusammenhang mit Fig. 4, wie, analog, optische Bauteile auch gemäss den Fig. 6 und 7 hergestellt werden können, optische Bauteile, die nach heutigem Wissensstand noch kaum realisiert wurden. Es ergeben sich damit völlig neuartige Bauteilstrukturen. Dies für optische Strahlen im sichtbaren wie auch im nichtsichtbaren Spektralbereich, wie im UV- oder IR-Bereich.

In Fig. 8 ist die Struktur eines weiteren, an sich erfindungsgemässen Bauteils dargestellt, bei welchem, ausgehend von demjenigen von Fig. 5 und analog von Fig. 6 und 7, das durchgehende Schichtsystem 7 bzw. 7a bzw. 7b abgedeckt ist mit einem weiteren Körper 24'' und mittels einer Kittschicht 11''.

In Fig. 9 ist der Stossbereich am an sich erfindungsgemässen Bauteil z.B. gemäss Fig. 5 dargestellt, bei dessen Weiterbildung das Schichtsystem 7 bzw. mit Blick auf die Figuren 6 oder 7, 7a bzw. 7b zusätzlich beschichtet, wie beispielsweise schutzbeschichtet ist mit einem Schichtsystem 40.

Schliesslich ist in Fig. 10 der bei Erstellung einer Struktur nach Fig. 3, also insbesondere eines X-Cubes, durch das erfindungsgemässe Vorgehen resultierende Stossbereich dargestellt, wobei das durchgehende Schichtsystem 7 bevorzugterweise durch das Rotreflektor-Schichtsystem gebildet ist. Ein analoges Bauteil mit den mit 'a' bzw. 'b' indizierten Bezugszeichen ergibt sich ausgehend von den Figuren 6 bzw. 7.

In Fig. 11 ist ein solches verallgemeintes, erfindungsgemässes optisches Bauteil 42 dargestellt; der Fachmann erkennt ohne weiteres die Vielzahl von Möglichkeiten, welche durch die vorliegende Erfindung eröffnet werden.

Insbesondere bei der X-Cube-Fertigung mit 90°-Rohlingen wird durch die präzise Bearbeitbarkeit sich gegenüberliegender Flächen, der Verkittung der Rohlinge, dem gemeinsamen Beschichten und Oberflächenbearbeitung und, vorzugsweise, dem Vereinzeln erst ganz am Schluss in die einzelnen optischen Bauelemente, eine ganz wesentliche Verbilligung des Fertigungsprozesses erreicht. Dieser ergibt zudem Bauteile mit wesentlich weniger optisch wirksamen Fehlerstellen, bedenkt man, dass beim vorgeschlagenen Verfahren die heiklen, zentral gelegenen 90°-Kanten nie freiliegen.

Als optisch wirksame Schichtsysteme werden insbesondere bei der X-Cube-Fertigung vorzugsweise dielektrische Schichtsysteme eingesetzt mit mindestens einer dielektrischen Schicht. Als Beschichtungsverfahren werden insbesondere die oben erwähnten, genügend kalten Verfahren eingesetzt. Selbstverständlich können Bauteile gefertigt werden, die in anderen Spektralbereichen als im sichtbaren wirksam sind, beispielsweise im UV- oder IR-Bereich, und es können nebst Farbteiler-Schichtsystemen Reflektorschichtsysteme, Antireflex-Schichtsysteme oder Polarisator-Schichtsysteme eingesetzt bzw. eingebaut werden. Es ergeben sich insbesondere X-Cubes für den Einsatz in Projektionssystemen, wo präzise und zudem kostengünstige optische Bauteile erforderlich sind.

### Bevorzugte Ausführungen:

Erfindungsgemäss wurden X-Cubes realisiert, bei denen, beispielsweise mit Blick auf Fig. 3 und insbesondere im Zentralbereich 9, die Schichtsysteme 7, 5', 5'' unter 90° aneinanderstossen, mit einer Winkelabweichung von höchstens 20 Winkelsekunden. Der Versatz der Stossstellen der Schichtsysteme 5' bzw. 5'' ist dabei höchstens 2 µm.

Die Überprüfung der Planarität, insbesondere der aneinanderstossenden Flächen mittels Interferometer ergibt höchstens 20 Interferenzringe, dabei bevorzugt 10 oder gar bevorzugt höchstens 5 Interferenzringe.

Es wird zur Verkittung der Teilkörper ein optischer Kitt, vorzugsweise ein UV-härtbarer Kitt, wie z.B. Delo-Photobond 4302-1, eingesetzt. Die Dicke der Kittschichten beträgt höchstens 10 µm, typischerweise bevorzugt höchstens 3 µm.

Die Schichtsysteme werden dabei als eine Abfolge von optisch hoch- und niedrigbrechenden Schichten abgelegt, wobei die hochbrechenden Schichten mindestens überwiegend aus einem Oxid oder Oxinitrid, dabei vorzugsweise aus mindestens einem der Materialien TiO₂, Ta₂O₅, Nb₂O₅, HfO₂, ZrO₂, SiOₓN_{y} bestehen.

Für die niederbrechenden Schichten wird bevorzugterweise ein Material eingesetzt, das mindestens überwiegend aus einem Oxid oder Oxinitrid, vorzugsweise aus mindestens einem der Materialien SiO₂, Al₂O₃, SiOₓN_{y} besteht.

Die Packungsdichte der Schichten ist mindestens 0,95, dabei bevorzugterweise mindestens 0,97, was insbesondere durch Sputtern oder ionenunterstütztes Beschichten erzielt wird. Die spektrale Temperaturshift der Schichten an Luft, bei Wechsel der Umgebungstemperatur von 20°C auf 100°C, ist höchstens 5 nm, dabei bevorzugterweise höchstens 2 nm.

Die aufgebrachten Schichtsysteme sind mechanisch stabil und erfüllen die Norm MIL-M-13508C (L-T-90 D bzw. A-A113B) sowie, bezüglich mechanischer und chemischer Stabilität, die Norm MIL-C-675B/C.

Die Schichten werden bevorzugterweise durch plasma- und/oder ionengestütztes Beschichten abgelegt, dabei bevorzugterweise durch ein genügend kaltes PVD- oder PECVD-Verfahren, dabei insbesondere bevorzugt durch Kaltbeschichtungsverfahren, bei denen Substrattemperaturen von höchstens 150°C, bevorzugterweise gar von höchstens 90°C, eingehalten werden.

## Patentansprüche

1. Optisches Bauelement, umfassend:
- einen Grundkörper (20', 20''),
- ein erstes optisch wirksames Schichtsystem (7), welches mit mindestens der einen Schichtsystemfläche an einer Fläche des Grundkörpers (20', 20'') liegt,
- ein zweites optisch wirksames Schichtsystem (5'), das im Grundkörper (20', 20'') eingebettet ist und in einem Stossbereich mit einer Breitfläche an der Fläche (∇∇∇) des Grundkörpers mündet,
**dadurch gekennzeichnet, dass** die Fläche (∇∇∇) des Grundkörpers und die Breitfläche des zweiten Schichtsystems (5) durchgehend gleich mechanisch oberflächenbearbeitet sind, und das erste Schichtsystem Licht in einem ersten Spektralbereich reflektiert, das zweite in einem zweiten Spektralbereich, wobei das menschliche Auge im zweiten Spektralbereich weniger empfindlich ist als im ersten.

2. Bauelement nach Anspruch 1, **dadurch gekennzeichnet, dass** das erste Schichtsystem (7) im Stossbereich (30) in Richtung gegen das zweite Schichtsystem hin eingebuchtet ist mit einer Einbuchtungstiefe von höchstens 5 µm, vorzugsweise von höchstens 2 µm.

3. Bauelement nach Anspruch 1 oder 2, **dadurch gekennzeichnet, dass** mindestens eines, vorzugsweise beide Schichtsysteme (7, 5') eine Abfolge optisch hoch- und niederbrechender Schichten umfasst, wobei die hochbrechenden Schichten vorzugsweise überwiegend aus einem Oxid oder Oxinitrid bestehen, vorzugsweise aus mindestens einem der Materialien
TiO₂, Ta₂O₅, Nb₂O₅, HfO₂, ZrO₂, SiOₓN_{y},
dass weiter die niederbrechenden Schichten bevorzugterweise überwiegend aus einem Oxid oder Oxinitrid bestehen, vorzugsweise aus mindestens einem der Materialien
SiO₂, Al₂O₃, SiOₓN_{y}.

4. Bauelement nach einem der Ansprüche 1 bis 3, **dadurch gekennzeichnet, dass** die Packungsdichte der Schichtsystemschichten mindestens 0,95, vorzugsweise mindestens 0,97 ist.

5. Bauelement nach einem der Ansprüche 1 bis 4, **dadurch gekennzeichnet, dass** die Schichtsysteme zwischen 20°C und 100°C eine spektrale Verschiebung ihrer Spektraleigenschaften von höchstens 5 nm, vorzugsweise von höchstens 2 nm aufweisen.

6. Optisches Bauelement, umfassend:
- einen Grundkörper (20', 20'')
- ein erstes, optisch wirksames Schichtsystem (7), welches mit mindestens der einen Schichtsystemfläche an einer Fläche (∇∇∇) des Grundkörpers (20', 20'') liegt und Licht in einem ersten Spektralbereich reflektiert,
- ein zweites, optisch wirksames Schichtsystem (5'), das im Grundkörper (20', 20'') eingebettet ist und in einem Stossbereich (80) mit seiner Breitfläche an der Fläche (∇∇∇) des Grundkörpers mündet und Licht in einem zweiten Spektralbereich reflektiert,
**dadurch gekennzeichnet, dass** die ersten und zweiten Spektralbereiche so gewählt sind, dass das menschliche Auge im zweiten Spektralbereich weniger empfindlich ist als im ersten.

7. Bauelement nach einem der Ansprüche 1 bis 6, **dadurch gekennzeichnet, dass** der Grundkörper aus mindestens zwei entlang einem der Schichtsysteme verkitteten Teilen (20', 20") besteht und die Dicke der Kittschicht höchstens 10 µm, vorzugsweise höchstens 3 µm beträgt.

8. Bauelement nach einem der Ansprüche 1 bis 7, **dadurch gekennzeichnet, dass** das erste Schichtsystem (7) auch mit seiner zweiten Fläche am Grundkörper (24'') liegt und damit, mindestens in einem Bereich, innerhalb des Grundkörpers (20'', 20', 24'') eingebettet ist.

9. Bauelement nach Anspruch 8, **dadurch gekennzeichnet, dass** ein drittes Schichtsystem (5'') vorgesehen ist, welches gewinkelt an die zweite Fläche des ersten Schichtsystems (7) stösst, wobei weiter bevorzugterweise:
- das zweite (5') und das dritte (5'') Schichtsystem mit ihren Breitflächen sich gegenüberliegen, vorzugsweise mit einem Versatz von höchstens 2 µm und/oder
- unter im wesentlichen gleichen Winkeln zur Grundkörperfläche in den Stossbereichen ausmünden, vorzugsweise unter nicht mehr als 20-Winkel-Sekunden abweichenden Winkeln und das dritte Schichtsystem Licht im zweiten Spektralbereich reflektiert.

10. Bauelement nach einem der Ansprüche 1 bis 9, **dadurch gekennzeichnet, dass** mindestens zwei der Schichtsystemgetrennten Körper (20', 20'', 24'') aus Materialien mit denselben optischen Eigenschaften bestehen.

11. Bauelement nach einem der Ansprüche 1 bis 10, **dadurch gekennzeichnet, dass** die zwischen sich die Schichtsysteme aufnehmenden Grundkörperteile (20', 20'', 24'') durch Ansprengen verbunden sind.

12. Bauelement nach einem der Ansprüche 1 bis 11, **dadurch gekennzeichnet, dass** die zwischen sich jeweils eines der Schichtsysteme (5', 5'', 7) aufnehmenden Grundkörperteile (20', 20'', 24) aus Glas und/oder einem Kunststoff, dabei vorzugsweise aus BK7-Glas, Polycarbonat oder PMMA bestehen.

13. Bauelement nach einem der Ansprüche 1 bis 12, **dadurch gekennzeichnet, dass** der erste Spektralbereich der ROT-Bereich, der zweite der BLAU-Bereich ist.

14. Bauelement nach einem der Ansprüche 9 bis 13, **dadurch gekennzeichnet, dass** das erste Schichtsystem (7) plan ist, die Breitflächen des zweiten (5') und dritten (5'') einander gegenüberliegen, vorzugsweise mit einem Versatz von höchstens 2 µm, und dass weiter vorzugsweise erstes (7), zweites (5') und drittes (5'') Schichtsystem in Diagonalflächen eines als Quader geformten Grundkörpers (1') liegen.

15. Bauelement nach Anspruch 14, **dadurch gekennzeichnet, dass** es ein X-Cube ist und vorzugsweise das erste Schichtsystem (7) selektiv Licht im sichtbaren ROT-Bereich im wesentlichen reflektiert, hingegen im sichtbaren BLAU- und GRÜN-Bereich mindestens weitgehend transmittiert und weiter vorzugsweise das zweite (5') und dritte (5'') Schichtsystem Licht im sichtbaren BLAU-Bereich mindestens weitgehend reflektieren und entsprechend Licht im GRÜN- bzw. ROT-Bereich mindestens weitgehend transmittieren.

16. Bauelement nach einem der Ansprüche 1 bis 15, **dadurch gekennzeichnet, dass** mindestens eines der Schichtsysteme mindestens eine dielektrische Schicht aufweist und vorzugsweise ein Polarisatorschichtsystem oder ein Farbfilterschichtsystem oder ein Antireflexschichtsystem bildet, dabei weiter vorzugsweise ein Rot- oder Blaureflektorsystem für S-polarisiertes Licht mit 45° Einfallswinkel.

17. Verfahren zur Herstellung eines Bauelementes nach mindestens einem der Ansprüche 1 bis 16, **dadurch gekennzeichnet, dass** man:
- an mindestens zwei Teilkörpern (20', 20'') je eine Oberfläche erstellt, welche zueinander komplementär sind,
- mindestens eine dieser komplementären Oberflächen (20'') mit einem in einem ersten Spektralbereich optisch wirksamen Schichtsystem (5') versieht (Fig. 4b),
- die Teilkörper (20', 20'') entlang der genannten komplementären Oberflächen mit dazwischenliegendem Schichtsystem (5') miteinander verbindet (Fig. 4d) und so einen zusammengesetzten Teilkörper (24) bildet,
- am zusammengesetzten Teilkörper (24) eine durchgehende Oberfläche, welche gewinkelt ist zu den komplementären Oberflächen und woran diese in einem Stossbereich stossen, mit einem weiteren in einem zweiten Spektralbereich optisch wirksamen Schichtsystem (7) versieht (24', und dabei die Spektralbereiche so wählt, dass das menschliche Auge im ersten weniger empfindlich ist als im zweiten.

18. Verfahren nach Anspruch 17, **dadurch gekennzeichnet, dass** man die durchgehende Oberfläche durch Fräsen und/oder Schleifen und/oder Läppen und/oder Polieren bearbeitet, vorzugsweise mit einer Planität, die höchstens 20 Interferenzringe, vorzugsweise höchstens 10, besonders bevorzugt höchstens 5 Interferenzringe, bei der Überprüfung mittels Interferometer ergibt.

19. Verfahren nach Anspruch 17 oder 18, **dadurch gekennzeichnet, dass** man die komplementären Oberflächen durch Läppen und/oder Polieren, vorzugsweise durch Doppelläppen und/oder Doppelpolieren erstellt, vorzugsweise mit einer Planität, die höchstens 20 Interferenzringe, vorzugsweise höchstens 10, besonders bevorzugt höchstens 5 Interferenzringe, bei der Überprüfung mittels Interferometer ergibt.

20. Verfahren nach einem der Ansprüche 17 bis 19, **dadurch gekennzeichnet, dass** man die Teilkörper durch Verkitten verbindet mittels eines optischen Kitts, vorzugsweise mittels eines UV-härtenden Kittes, z.B. mittels Delo-Photobond 4302-1, vorzugsweise mit einer Kittschicht-Dicke von höchstens 10 µm, vorzugsweise von höchstens 3 µm.

21. Verfahren nach Anspruch 20, **dadurch gekennzeichnet, dass** man die mechanische Oberflächen-Bearbeitung so vornimmt, dass dadurch eine Einbuchtung im Stossbereich von höchstens 5 µm, vorzugsweise von höchstens 2 µm entsteht.

22. Verfahren nach einem der Ansprüche 17 bis 21, **dadurch gekennzeichnet, dass** man den zusammengesetzten Teilkörper durch Zertrennen, vorzugsweise durch Sägen, in weitere Teilkörper (24) zerteilt und dadurch jeweils zwei weitere Oberflächen schafft, welche gewinkelt sind zu den komplementären Oberflächen.

23. Verfahren nach Anspruch 22, **dadurch gekennzeichnet, dass** man die durch den Zertrennungsschritt neu entstandenen Oberflächen durch Läppen und/oder Polieren, vorzugsweise durch Doppelläppen und/oder Doppelpolieren bearbeitet, derart, dass an jeweils zwei der weiteren Teilkörper (24) komplementäre Oberflächen (24') entstehen, vorzugsweise mit einer Planität, die höchstens 20, vorzugsweise höchstens 10, besonders bevorzugt höchstens 3 Interferenzringe bei der Überprüfung mittels Interferometer ergibt.

24. Verfahren nach einem der Ansprüche 17 bis 23, **dadurch gekennzeichnet, dass** man mehrere der zusammengesetzten Teilkörper (26) gemeinsam bearbeitet und durchgehend beschichtet.

25. Verfahren nach einem der Ansprüche 17 bis 24, **dadurch gekennzeichnet, dass** man die durchgehende Oberfläche selber mit dem weiteren Schichtsystem (7) versieht.

26. Verfahren nach einem der Ansprüche 17 bis 25, **dadurch gekennzeichnet, dass** man auf die gegebenenfalls mit dem weiteren Schichtsystem (7) versehene durchgehende Oberfläche eine zu dieser Oberfläche komplementäre Oberfläche mindestens eines weiteren Teilkörpers (24'') des Bauelementes aufbringt.

27. Verfahren nach Anspruch 26, **dadurch gekennzeichnet, dass** man als weiteren Teilkörper einen weiteren zusammengesetzten Teilkörper (24, 26) aufbringt.

28. Verfahren nach Anspruch 27, **dadurch gekennzeichnet, dass** man die optisch wirksamen Schichtsysteme (5', 5'') an den aufeinander gebrachten, zusammengesetzten Teilkörpern (24, 26, 24', 26') sich gegenüberliegend an das weitere Schichtsystem (7) stossend anordnet, vorzugsweise mit einem Stossstellenversatz von höchstens 2 µm.

29. Verfahren nach Anspruch 28, **dadurch gekennzeichnet, dass** die durchgehenden Oberflächen der beiden zusammengesetzten Teilkörper plan ausgebildet werden und die optisch wirksamen Schichtsysteme (5', 5'') an den zusammengesetzten Teilkörpern senkrecht zu den durchgehenden Oberflächen verlaufend angeordnet werden, vorzugsweise mit einer Abweichung bezüglich 90° von höchstens 20 Winkelsekunden.

30. Verfahren nach einem der Ansprüche 17 bis 29, **dadurch gekennzeichnet, dass** darnach der zusammengesetzte Teilkörper oder die zusammengesetzten Teilkörper gemeinsam zur Bildung von Bauelementen (22) so zertrennt werden, dass die abgetrennten Teile beide der optisch wirksamen Schichtsysteme umfassen.

31. Verfahren nach einem der Ansprüche 17 bis 30, **dadurch gekennzeichnet, dass** man mindestens eines der Schichtsysteme als dielektrisches Schichtsystem, vorzugsweise durch ein plasma- und/oder ionengestütztes Beschichtungsverfahren, vorzugsweise durch ein genügend kaltes PVD- oder PECVD-Verfahren, insbesondere aber durch ein Kaltbeschichtungsverfahren mit Substrattemperatur von höchstens 150°C, vorzugsweise von höchstens 80°C aufbringt.

32. Verfahren nach einem der Ansprüche 17 bis 31, **dadurch gekennzeichnet, dass** man mindestens eines der Schichtsysteme mit mindestens einer dielektrischen Schicht herstellt, vorzugsweise als Reflektorschichtsystem, als Polarisatorschichtsystem oder als Farbteilerschichtsystem oder als Antireflexschichtsystem.

33. Verfahren nach einem der Ansprüche 17 bis 32, **dadurch gekennzeichnet, dass** man bei der mechanischen Oberflächenbearbeitung von Teilkörpern und/oder zusammengesetzten Teilkörpern und/oder des Bauelementes sich gegenüberliegende Flächen gleichzeitig bearbeitet, d.h. doppelbearbeitet, insbesondere durch Doppelläppen und/oder Doppelpolieren.

34. Verfahren nach einem der Ansprüche 17 bis 33, **dadurch gekennzeichnet, dass** man das weitere durchgehende Schichtsystem (7) als rotreflektierendes Schichtsystem ausbildet, vorzugsweise für S-polarisiertes, mit 45° auf das Schichtsystem einfallendes Licht, das eine Schichtsystem (5) als blaureflektierendes Schichtsystem, vorzugsweise für S-polarisiertes, mit 45° auf das Schichtsystem einfallendes Licht.

35. Verfahren nach einem der Ansprüche 17 bis 34, **dadurch gekennzeichnet, dass** man nach Verbinden der zusammengesetzten Teilkörper den resultierenden Körper so formt, dass die Schichtsysteme (5', 5'', 7) in Kanten des resultierenden Körpers (1') an die Oberfläche stossen und darnach den geformten Körper in Einzelkörper auftrennen.

36. Verfahren nach Anspruch 35, **dadurch gekennzeichnet, dass** man das Formen des Körpers durch Sägen vornimmt und dadurch Flächen bildet, die im wesentlichen mit 45° zu den Schichtsystemem stehen, vorzugsweise mit einer Genauigkeit von mindestens 2 Winkel-Minuten, dass man anschliessend diese Flächen durch Läppen und/oder Polieren, vorzugsweise durch Doppelläppen und/oder Doppelpolieren, bearbeitet und vorzugsweise mit einem Antireflex-Schichtsystem beschichtet.

37. Verfahren nach einem der Ansprüche 17 bis 36, **dadurch gekennzeichnet, dass** man das Bauelement aus quaderförmigen Teilkörpern zusammensetzt und erst zuletzt zu Quaderflächen schiefwinklige Flächen anformt.

38. Verwendung eines Bauelementes nach einem der Ansprüche 1 bis 16 bzw. des Verfahrens zur Herstellung eines Bauelementes nach einem der Ansprüche 17 bis 37 als X-Cube bzw. für die Herstellung eines solchen.

39. Optische Projektionsanordnung mit mindestens einem als X-Cube ausgebildeten Bauelement nach einem der Ansprüche 1 bis 16.

40. CCD-Kamera mit einem X-Cube nach einem der Ansprüche 1 bis 16 für die Farbaufteilung.
